(19) Europäisches Patentamt
European Patent Office
Office européen des brevets

(11) Veröffentlichungsnummer: **0 098 809**
**B1**

# (12) EUROPÄISCHE PATENTSCHRIFT

(45) Veröffentlichungstag der Patentschrift: **07.10.87**

(51) Int. Cl.[4]: **C 07 F 9/165**, C 07 F 9/21, C 10 M 105/34, 10 M 105/72, C 10 M 105/74

(21) Anmeldenummer: **83810304.2**

(22) Anmeldetag: **04.07.83**

(54) **Phosphoryl-mercaptocarbonsäuresalze.**

(30) Priorität: **09.07.82 CH 4204/82**

(43) Veröffentlichungstag der Anmeldung: **18.01.84 Patentblatt 84/3**

(45) Bekanntmachung des Hinweises auf die Patenterteilung: **07.10.87 Patentblatt 87/41**

(84) Benannte Vertragsstaaten: **DE FR GB IT**

(56) Entgegenhaltungen:
**US - A - 2 645 657**
**US - A - 4 333 841**

(73) Patentinhaber: **CIBA-GEIGY AG, Klybeckstrasse 141, CH-4002 Basel (CH)**

(72) Erfinder: **Schmidt, Andreas, Dr., Hubackerweg 32, CH-4153 Reinach (CH)**
Erfinder: **Kirchmayr, Rudolf, Dr., Ettingerstrasse 9, CH-4147 Aesch (CH)**

**EP 0 098 809 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Verwendung von Phosphoryl-mercaptocarbonsäuresalzen als Zusätze zu wassermischbaren Hydraulikflüssigkeiten, die mit diesen Substanzen ausgerüstete wassermischbaren Hydraulikflüssigkeit, sowie neue Thiophosphoryl-mercaptocarbonsäuresalze.

Im allgemeinen werden Hydraulikflüssigkeiten verschiedene Zusatzstoffe zur Verbesserung ihrer Gebrauchseigenschaften beigegeben. Insbesondere besteht ein Bedarf an Additiven, welche die Vorrichtungen vor Reibungsabnützung schützen sollen. An solche Verschleissinhibitoren wird die Anforderung gestellt, dass sie das Lasttragevermögen der Hydraulikflüssigkeit erhöhen und nicht korrodierend auf die beteiligten Metallteile wirken.

Die Verwendung von Thiophosphoryl-mercaptocarbonsäuresalzen als Zusätze zu wassermischbaren Hydraulikflüssigkeiten ist neu. Es ist lediglich die Verwendung von Äthylestern von 0,0-Dialkyl- bzw. 0,0-Bis-(alkyl-phenyl)-thiophosphoryl-mercaptoessigsäuren als ‹ashless additives› zu Schmierölen beschrieben worden [P.S. Belov et al., Naftepererab. Neftekhim, Moskau, 1977 (9), 20–1: Chem. Abstr. 87, 203.995 (1977)]. Ferner sind im GB Pat. Nr. 948 039 Alkalimetallsalze von 0,0-Dialkyl($C_1$–$C_3$)-thiophosphoryl-mercaptoessigsäuren als Ausgangsstoffe zur Herstellung der entsprechenden Mercaptoessigsäure-niederalkylester erwähnt. Weiter sind in der US-PS 4 333 841 Dithiophosphatoacetamide und aminsalze als EP/AW-Additive und Korrosionsschutzmittel für Schmiermittel beschrieben.

Die Herstellung von Metallsalzen aus Phosphorylmercaptocarbonsäuren ist in der US-PS 2 645 657 erwähnt.

Es wurde nun eine Klasse von Phosphorylmercaptoessigsäure- bzw. -propionsäuresalzen gefunden, welche eine ausgezeichnete Wirksamkeit in wassermischbaren Hydraulikflüssigkeiten entfalten. Die Verbindungen haben gute Lasttrageeigenschaften und ausgezeichnetes Korrosionsverhalten.

Die vorliegende Erfindung betrifft daher die Verwendung von Verbindungen der Formel I

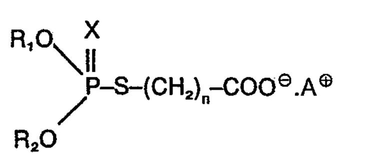

(I),

worin $R_1$ und $R_2$ unabhängig voneinander $C_1$–$C_6$ Alkyl, gegebenenfalls $C_1$–$C_4$ Alkyl-substituiertes Phenyl oder $C_7$–$C_8$ Aralkyl, oder $R_1$ und $R_2$ zusammen eine Gruppe der Formel II

$$-(R_3)C(R_4)-[(R_5)C(R_6)]_m-(R_7)C(R_8)- \quad (II)$$

bedeuten, worin m 0 oder 1 ist und $R_3$, $R_4$, $R_5$, $R_6$, $R_7$ und $R_8$ unabhängig voneinander Wasserstoff oder Methyl sind, und ferner n 1 oder 2 ist, und X Sauerstoff oder Schwefel bedeutet, und A Li, K, Na, $NH_4$ oder eine Gruppe der Formel III

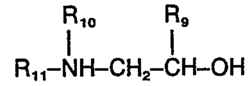

(III)

ist, worin $R_9$ Wasserstoff oder Methyl ist und $R_{10}$ und $R_{11}$ unabhängig voneinander Wasserstoff, $C_1$–$C_3$ Alkyl oder eine Gruppe $-CH_2-CH(R_9)-OH$ bedeuten, worin $R_9$ die oben angegebene Bedeutung hat, als Zusätze zu wassermischbaren Hydraulikflüssigkeiten.

Sind $R_1$ und $R_2$ $C_1$–$C_6$ Alkyl, so kann es sich dabei um Methyl, Äthyl, n-Propyl, Isopropyl, n-Butyl, Isobutyl, sec.-Butyl, tert.-Butyl, n-Pentyl, Isopentyl, Neopentyl, tert.-Pentyl, n-Hexyl oder Isohexyl handeln. Bevorzugte Alkylgruppen besitzen 1 bis 5, besonders 3 bis 5 und insbesondere 4 C-Atome.

Ist $R_1$ und/oder $R_2$ als Phenyl mit $C_1$–$C_4$ Alkyl substituiert, handelt es sich beispielsweise um Tolyl, 2-Äthylphenyl oder 4-tert.-Butylphenyl.

$R_1$ und $R_2$ sind als $C_7$ oder $C_8$ Aralkyl Benzyl oder 2-Phenyläthyl.

In bevorzugten Verbindungen der Formel I haben $R_1$ und $R_2$ die gleiche Bedeutung.

Bedeuten $R_1$ und $R_2$ zusammen eine Alkylengruppe der Formel II, so handelt es sich beispielsweise um Äthylen, 1-Methyläthylen, 1,1-Dimethyläthylen, 1,1,2-Trimethyläthylen, 1,1,2,2,-Tetramethyläthylen, Propylen-1,3; 1-Methyl-propylen-1,3; 1,1,3-Trimethyl-propylen-1,3 oder 2,2,-Dimethylpropylen-1,3.

$R_9$ kann Methyl bedeuten, ist jedoch bevorzugt Wasserstoff.

$R_{10}$ und $R_{11}$ sind als $C_1$–$C_3$ Alkyl z.B. Methyl, Äthyl, n-Propyl oder Isopropyl.

$R_{10}$ ist in bevorzugten Verbindungen Wasserstoff oder eine Gruppe $-CH_2-CH_2-OH$ und $R_{11}$ bedeutet bevorzugt $-CH_2-CH_2-OH$.

Kommt in der Formel III der Rest $-CH_2-CH(R_9)-OH$ mehrmals vor, so haben in bevorzugten Verbindungen alle Substituenten $R_9$ die gleiche Bedeutung.

Die bevorzugte Bedeutung von X ist Schwefel.

A bedeutet bevorzugt K, Na, $NH_4$ oder eine Gruppe der Formel III, worin $R_9$, $R_{10}$ und $R_{11}$ die angegebene Bedeutung haben.

Bevorzugt werden also solche Verbindungen der Formel I zur Verbesserung der Hochdruckeigenschaften von wassermischbaren Hydraulikflüssigkeiten verwendet, in welchen $R_1$ und $R_2$ unabhängig voneinander $C_1$–$C_5$ Alkyl sind, X Sauerstoff oder Schwefel bedeutet und n 1 oder 2 ist und A K, Na, $NH_4$ oder eine Gruppe der Formel III bedeutet, worin $R_9$, $R_{10}$ und $R_{11}$ die oben angegebene Bedeutung haben.

Beispiele für Verbindungen der Formel I sind solche, in welchen die Symbole folgende Bedeutung haben:

| $R_1$ | $R_2$ | X | n | A |
|---|---|---|---|---|
| Methyl | Methyl | S | 1 | $H_2N(CH_2CH_2OH)_2$ |
| Isopropyl | Isobutyl | O | 2 | $NH_4$ |
| sec.-Butyl | sec.-Butyl | S | 1 | Na |
| Phenyl | Phenyl | O | 1 | K |
| n-Hexyl | Methyl | S | 2 | $HN(CH_2CH_2OH)_3$ |
| Äthyl | Äthyl | S | 1 | $(CH_3)H_2N(CH_2CH[CH_3]OH)$ |

| $R_1 + R_2$ | X | n | A |
|---|---|---|---|
| Äthylen | S | 1 | $NH_4$ |
| Propylen-1,3 | S | 1 | $HN(CH_2CH_2OH)_3$ |
| 1,1-Dimethyläthylen | O | 2 | $HN(CH_2CH_2OH)_3$ |
| 1-Methyl-propylen-1,3 | S | 1 | Na |

Die Verbindungen der Formel I, worin $R_1$ und $R_2$ unabhängig voneinander für n = 1 oder 2 gegebenenfalls $C_1$–$C_4$ Alkyl-substituiertes Phenyl oder $C_7$–$C_8$ Aralkyl oder $R_1$ und $R_2$ zusammen eine Gruppe der Formel II

$$-(R_3)C(R_4)-[(R_5)C(R_6)]_m-(R_7)C(R_8)- \quad (II)$$

bedeutet, worin m 0 oder 1 ist und $R_3$, $R_4$, $R_5$, $R_6$, $R_7$ und $R_8$ unabhängig voneinander Wasserstoff oder Methyl sind und $R_1$ und $R_2$ ferner unabhängig voneinander für n = 1: $C_4$–$C_6$ Alkyl sind und $R_1$ und $R_2$, falls A $NH_4$ oder eine Gruppe der Formel III

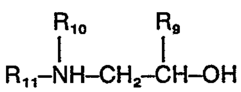
(III)

ist, worin $R_9$ Wasserstoff oder Methyl ist und $R_{10}$ und $R_{11}$ unabhängig voneinander Wasserstoff, $C_1$–$C_3$ Alkyl oder eine Gruppe $-CH_2-CH(R_9)-OH$ bedeutet, worin $R_9$ die oben angegebene Bedeutung hat, auch $C_1$–$C_3$ Alkyl sind und $R_1$ und $R_2$ für n = 2: $C_1$–$C_6$ Alkyl bedeuten, und ferner X Sauerstoff oder Schwefel bedeutet, und A Li, K, Na, $NH_4$ oder eine Gruppe der Formel III ist, worin $R_9$, $R_{10}$ und $R_{11}$ die oben angegebene Bedeutung haben, sind neu und stellen daher auch einen Gegenstand der vorliegenden Erfindung dar.

Die Substituenten der neuen Verbindungen können die oben als beispielhaft und bevorzugt erwähnten Bedeutungen haben.

Die erfindungsgemäss zu verwendenden Verbindungen der Formel I, worin X Schwefel ist und die übrigen Symbole die eingangs erwähnte Bedeutung haben, stellen daher als Stoffe einen bevorzugten Gegenstand der Erfindung dar.

Die Herstellung der Verbindungen der Formel I kann nach an sich bekannten Methoden erfolgen, insbesondere durch Versalzung der Säuren der Formel IV

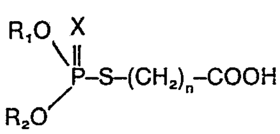
(IV),

worin $R_1$, $R_2$, X und n die oben angegebene Bedeutung haben, mit einem basischen Li-, K- oder Na-Salz, mit $NH_3$ oder einer Verbindung der Formel V

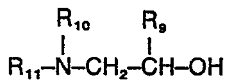
(V),

worin $R_9$, $R_{10}$ und $R_{11}$ die oben angegebene Bedeutung haben.

Geeignete Li-, K- und Na-Salze sind z. B. Hydroxide oder Carbonate. Die Umsetzung erfolgt vorzugsweise in ungefähr molaren Verhältnissen. Die Verbindungen der Formel V sind allgemein bekannte Substanzen und vielfach handelsüblich.

Die Verbindungen der Formel IV sind ebenfalls bekannt und können nach bekannten Methoden hergestellt werden, etwa dadurch, dass man ein Phosphorsäurederivat der Formel VI

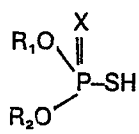
(VI)

für n 1 mit Chloressigsäure und für n 2 mit Acrylsäure gegebenenfalls in Gegenwart eines Säureacceptors versetzt,

In der Formel VI haben die Symbole $R_1$, $R_2$ und X die erwähnte Bedeutung.

Es ist möglich, die für die oben beschriebene Versalzung eingesetzte Base als Säureacceptor einzusetzen. Die Base wird in diesem Falle in bezüglich der Verbindung der Formel IV doppelter molarer Menge eingesetzt. Die beiden Reaktionsschritte können in dieser vereinfachten Methode simultan ablaufen.

Die erfindungsgemässen Verbindungen sind aufgrund ihrer das Hochdruckverhalten und Korrosionsschutz vermittelnden Eigenschaften als Zusätze für wassermischbare Hydraulikflüssigkeiten (insbesondere Gemische von Wasser und wasserlöslichen organischen Produkten), insbesondere Glykolen, geeignet. Die Verbindungen

der Formel I wirken dabei schon in geringen Mengen, z. B. 0,001 bis 8 Gew.-%, bevorzugt 0,02 bis 5 Gew.-%, bezogen auf die Hydraulikflüssigkeit.

Die neuen Zusätze können in Kombination mit anderen Additiven, wie Antioxidantien, Metallpassivatoren, Rostinhibitoren und anderen Verschleissschutzkomponenten, verwendet werden.

Die folgenden Beispiele erläutern die Erfindung.

Beispiel 1:

6,9 g (0,05 Mol) Kaliumcarbonat werden in 150 ml Toluol suspendiert und unter Rühren zuerst mit 21,4 g (0,1 Mol) 0,0-Diisopropyldithiophosphorsäure und dann 9,4 g (0,1 Mol) Chloressigsäure versetzt. Anschliessend heizt man während 5 Stunden auf 60–65 °C, kühlt auf Raumtemperatur ab und saugt vom ausgefallenen Kaliumchlorid ab. Das Filtrat wird 3mal mit je 25 ml destilliertem Wasser gewaschen und unter reduziertem Druck die organische Phase vollständig eingeengt. Der Rückstand wird unter Rühren mit 14,9 g (0,1 Mol) Triäthanolamin versetzt, in Wasser gelöst, über Tierkohle filtriert und vollständig unter reduziertem Druck eingeengt. Man erhält so das Triäthanolaminsalz der 0,0-Diisopropyl-thiophosphorylmercaptoessigsäure als ein helles, viskoses Öl (Additiv Nr. 1).

Ersetzt man in diesem Beispiel die 0,0-Diisopropyl-dithiophosphorsäure und/oder das Triäthanolamin durch die in Tabelle 1 aufgeführten entsprechenden Dithiophosphorsäuren bzw. Basen, so erhält man bei sonst gleicher Arbeitsweise die entsprechenden Salze.

Tabelle 1

| Additiv Nr. | Dithiophosphorsäure | Base | Additiv |
|---|---|---|---|
| 2 | 0,0-Diisopropyl-dithiophosphorsäure | $HN(CH_2CH_2OH)_2$ | Diäthanolaminsalz der 0,0-Diisopropyl-thio-phosphorylmercaptoessigsäure |
| 3 | 0,0-Diisopropyl-dithiophosphorsäure | KOH | K-Salz der 0,0-Diiso-propylthiophosphoryl-mercaptoessigsäure |
| 4 | 0,0-Diisopropyl-di-thiophosphorsäure | NaOH | Na-Salz der 0,0-Diisopropylthiophosphoryl-mercaptoessigsäure |
| 5 | 0,0-Diisobutyldi-thiophosphorsäure | $N(CH_2CH_2OH)_3$ | Triäthanolaminsalz der 0,0-Diisobutyl-thio-phosphorylmercaptoessigsäure |
| 6 | 0,0-Diisobutyldi-thiophosphorsäure | $HN(CH_2CH_2OH)_2$ | Diäthanolaminsalz der 0,0-Diisobutyl-thio-phosphorylmercaptoessigsäure |
| 7 | 0,0-Diisobutyldi-thiophosphorsäure | KOH | K-Salz der 0,0-Diiso-butylthiophosphoryl-mercaptoessigsäure |
| 8 | 0,0-Diisobutyldi-thiophosphorsäure | NaOH | Na-Salz der 0,0-Diiso-butylthiophosphoryl-mercaptoessigsäure |

Beispiel 2:

21,4 g (0,1 Mol) 0,0-Diisopropyldithiophosphorsäure und 7,2 g (0,1 Mol) Acrylsäure werden in 50 ml Toluol vorgelegt und 5 Stunden bei 80 °C gerührt. Danach wird unter reduziertem Druck vollständig eingeengt und man erhält so die 0,0-Diisopropyl-thiophosphoryl-3-mercaptopropionsäure als ein gelbliches Öl. Diese wird in 50 ml Äthanol gelöst, mit 15 g (0,1 Mol) Triäthanolamin unter Rühren neutralisiert und unter reduziertem Druck vollständig eingeengt. Man erhält so das Triäthanolaminsalz als ein bräunliches Öl (Additiv Nr. 9).

Ersetzt man in diesem Beispiel die 0,0-Diisopropyldithiophosphorsäure und/oder das Triäthanolamin durch die in Tabelle 2 aufgeführten entsprechenden 0,0-Dithiophosphorsäuren bzw. Basen, so erhält man bei sonst gleicher Arbeitsweise die entsprechenden Salze.

Tabelle 2

| Additiv Nr. | Dithiophosphorsäure | Base | Additiv |
|---|---|---|---|
| 10 | 0,0-Diisopropyl-di-thio-phosphorsäure | $HN(CH_2CH_2\text{-}OH)_2$ | Diäthanolaminsalz der 0,0-Diisopropyl-thiophosphoryl-3-mercaptopropionsäure |
| 11 | 0,0-Diisorpropyl-di-thio-phosphorsäure | NaOH | Na-salz der 0,0-Diisopropyl-thiophosphoryl-3-mercapto-propionsäure |
| 12 | 0,0-Diisopropyl-di-thio-phosphorsäure | KOH | K-Salz der 0,0-Diisopropyl-thiophosphoryl-3-mercapto-propionsäure |
| 13 | 0,0-Diisobutyl-di-thio-phosphorsäure | $N(CH_2CH_2OH)_3$ | Triäthanolaminsalz der 0,0-Diisobutyl-thiophosphoryl-3-mercaptopropionsäure |
| 14 | 0,0-Diisobutyl-di-thio-phosphorsäure | $HN(CH_2CH_2\text{-}OH)_2$ | Diäthanolaminsalz der 0,0-Diisobutyl-thiophosphoryl-3-mercaptopropionsäure |
| 15 | 0,0-Diisobutyl-di-thio-phosphorsäure | NaOH | Na-Salz der 0,0-Diisobutyl-thiophosphoryl-3-mercpto-propionsäure |
| 16 | 0,0-Diisobutyl-di-thio-phosphorsäure | KOH | K-Salz der 0,0-Diisobutyl-thiophosphoryl-3-mercapto-propionsäure |
| 17 | 0,0-Diisopropyl-di-thio-phosphorsäure | LiOH | Li-Salz der 0,0-Diisopropyl-thiophosphoryl-3-mercapto-propionsäure |
| 18 | 0,0-Diisopropyl-di-thio-phosphorsäure | | N-Isopropyl-äthanolaminsalz der 0,0-Diisopropyl-thio-phosphoryl-3-mercapto-propionsäure |
| 19 | 0,0-Diisopropyl-di-thio-phosphorsäure | | N-(2-Hydroxypropyl)-äthanol-aminsalz der 0,0-Diisopropyl-thiophosphoryl-3-mercapto-propionsäure |

Beispiel 3:

Mit dem Shell-Vierkugel-Apparat (IP 239/73 Extreme pressure and wear lubricant test for oils and greases-four ballmachine) wurden folgende Werte bestimmt:

1. W.L. = Weld load (Schweisslast). Das ist die Last, bei der die 4 Kugeln innerhalb von 10 Sekunden zusammenschweissen.
2. W.S.D. = Wear Scar Diameter in mm: Das ist der mittlere Verschleissdurchmesser bei einer Belastung von 400 N während 10 bzw. 30 Minuten.

Als Testflüssigkeit für die Wirksamkeit der Additive wurde destilliertes Wasser bzw. ein Gemisch von 40% Wasser/40% Monoäthylenglykol/20% Polyäthylenglykol verwendet.

Tabelle 3

| Additiv | 1% Additiv in destilliertem Wasser | | 5% Additiv in Wasser/Glykol/Polyäthylenglykol | |
|---|---|---|---|---|
| | W.L. (N) | W.S.D. 10 Min. (mm) | W.L. (N) | W.S.D. 30 Min. (mm) |
| keines | 1200 | verschweisst | 1400 | 0,7 |
| 1 | 1400 | 1,1 | 2000 | 1,0 |
| 2 | 1400 | 1,0 | 2200 | 0,9 |
| 3 | 1400 | 1,0 | 2800 | 0,7 |
| 4 | 1400 | 1,2 | 2600 | 0,8 |
| 5 | 2000 | 0,6 | 1800 | 0,8 |

Tabelle 3 (Fortsetzung)

| Additiv | 1% Additiv in destilliertem Wasser W.L. (N) | 1% Additiv in destilliertem Wasser W.S.D. 10 Min. (mm) | 5% Additiv in Wasser/Glykol/ Polyäthylenglykol W.L. (N) | 5% Additiv in Wasser/Glykol/ Polyäthylenglykol W.S.D. 30 Min. (mm) |
|---|---|---|---|---|
| 6 | 2400 | 0,6 | 2000 | 0,7 |
| 7 | 2000 | 0,7 | 2400 | 0,75 |
| 8 | 2200 | 0,65 | 2200 | 0,8 |
| 9 | 2000 | 0,6 | 1800 | 0,7 |
| 10 | 1600 | 0,7 | 2000 | 0,8 |
| 11 | – | – | 2400 | 0,7 |
| 12 | 1800 | 0,6 | – | – |
| 13 | 2400 | 0,6 | 2000 | 0,8 |
| 14 | 2000 | – | 2000 | 0,8 |
| 15 | 2200 | 0,5 | 2400 | 0,85 |
| 16 | 2200 | 0,6 | 2000 | 0,8 |

Beispiel 4:

Mit der Reibverschleisswaage nach Reichert (Reichert Wear Test DBGM 1749247) wurde die Verschleisskalotte bestimmt.

Bei diesem Reibungsprüfgerät wird über ein Doppelhebelsystem eine fest eingespannte Prüfrolle an einem umlaufenden Schleifring angepresst, der mit seinem unteren Drittel in die zu prüfende Flüssigkeit taucht, deren Druckaufnahmevermögen beurteilt werden soll. Bei umlaufendem Schleifring entstehen je nach Druckaufnahmevermögen der Flüssigkeit auf die Prüfrolle Abschliffflächen (Verschleisskalotten), deren Grösse von der Tragfähigkeit des Prüfstoffes abhängt.

Prüfbedingungen des Gerätes:

| | |
|---|---|
| Flüssigkeitsmenge: | ca. 25 ml |
| Prüfkörper: | Ring und Rolle, Achsen gekreuzt |
| Gleitgeschwindigkeit: | 1,70 m/sec |
| Testdauer: | ≙ 100 Meter Laufstrecke |
| Ring und Rollenmaterial: | Stahl, gehärtet |
| Normallast: | 10 N Belastungsgewicht |
| Reibungsart: | Gleitreibung |
| Messgrössen: | Abriebfläche in $mm^2$ |

Als Testflüssigkeit für die Wirksamkeit der Additive wurde destilliertes Wasser bzw. ein Gemisch von 40% Wasser/40% Monoäthylenglykol/20% Polyäthylenglykol verwendet.

Tabelle 4

| Additiv | 1% Additiv in destilliertem Wasser ($mm^2$) | 5% Additiv in Wasser/Glykol/ Polyäthylenglykol ($mm^2$) |
|---|---|---|
| keines | 17,5 | 9,3 |
| 1 | 7,4 | 4,4 |
| 2 | 10,7 | 3,9 |
| 3 | 12,4 | 3,8 |

Tabelle 4 (Fortsetzung)

| Additiv | 1% Additiv in destilliertem Wasser ($mm^2$) | 5% Additiv in Wasser/Glykol/ Polyäthylenglykol ($mm^2$) |
|---|---|---|
| 4 | 8,9 | 3,1 |
| 5 | 7,3 | 5,4 |
| 6 | 7,4 | 4,4 |
| 7 | 6,6 | 3,6 |
| 8 | 7,2 | 3,7 |
| 9 | 10 | 6,1 |
| 10 | 12,8 | 4,5 |
| 11 | – | 3,1 |
| 12 | 7,9 | – |
| 13 | 6,9 | 5,5 |
| 14 | 4,4 | 4,1 |
| 15 | 6,9 | 2,8 |
| 16 | 6,6 | 3,5 |

Beispiel 5:

Mit dem Shell-Vierkugel-Apparat wurden die folgenden Werte: 1.) W.L. = Weld Load und 2.) W.S.D. = Wear Scar Diameter (eine Beschreibung dieser Parameter ist in Beispiel 3 gegeben) bestimmt.

Als Testflüssigkeit für die Wirksamkeit der Additive wurde deionisiertes Wasser verwendet, welches als Rostinhibitor 0,75 Gew.-% 2,4,6-Tris-(5'-carboxypentylamino)-1,3,5-triazin und so viel Triäthanolamin enthält, bis der pH-Wert von 8,5 erreicht wird.

Tabelle 5

| Additiv-Nr. | 2,5% Additiv in der Testflüssigkeit Test mit dem Shell-Vierkugel-Apparat W.L. (N) | W.S.D. 10 Min. (mm) |
|---|---|---|
| 11 | 1900 | 0,55 |
| 13 | 2200 | 0,5 |
| 16 | 2100 | 0,5 |
| 17 | 1800 | 0,65 |
| 18 | 1500 | 0,6 |
| 19 | 1600 | 0,65 |

Beispiel 6:

Mit der Reibverschleisswaage nach Reichert (Reichert Wear Test DBGM 17 49 246) wurde die Verschleisskalotte bestimmt (eine Beschreibung der Methode und der Parameter ist in Beispiel 4 gegeben; für Beispiel 6 ist jedoch das Belastungsgewicht in 15 N abzuändern).

Als Testflüssigkeit für die Wirksamkeit der Additive wurde deionisiertes Wasser verwendet, welches als Rostinhibitor 0,75 Gew.-% 2,4,6-Tris-(5'-carboxypentylamino)-1,3,5-triazin und so viel Triäthanolamin enthält, bis der pH-Wert von 8,5 erreicht wird.

Um die Wirksamkeit der Testflüssigkeiten aufzuzeigen, wird hier zum Vergleich der im Reichert-Test erzielte Wert für eine Referenzflüssigkeit, die aus 50% deionisiertem Wasser und 50% Äthanol besteht, angegeben; dieser Wert liegt im Bereich 28 bis 30 $mm^2$.

Tabelle 6

| Konzentration | 2,5% Additiv in der Testflüssigkeit | | | | | |
|---|---|---|---|---|---|---|
| Additiv-Nr. | 11 | 13 | 16 | 17 | 18 | 19 |
| Reichert Wear Test ($mm^2$) | 2,4 | 1,5 | 2,0 | 2,7 | 2,7 | 8,3 |

Beispiel 7:

Mit dem «Späne-Filtrierpapier-Verfahren» nach DIN 51 360/Teil 2 wurden die Korrosionseigenschaften bestimmt.

Bei diesem Verfahren wird in einem Becher mit Wasser nach bestimmten Vorschriften eine Mischung, die unter anderem auch das zu untersuchende Additiv enthält, hergestellt. Graugussspäne werden auf einem Rundfilter mit der frisch hergestellten Mischung benetzt, 2 Stunden lang in einer Petri-Schale der Raumtemperatur ausgesetzt und anschliessend das Rundfilter auf Korrosionserscheinungen visuell bewertet.

Die Korrosionsgrade werden aufgrund einer Tabelle (vergleiche DIN 51 360/Teil 2) ausgewertet, in welcher 0 keine und 1, 2, 3 und 4 zunehmend stärkere Korrosion bedeuten.

Als Testflüssigkeit für die Wirksamkeit der Additive wurde deionisiertes Wasser verwendet, welches als Rostinhibitor 0,75 Gew.-% 2,4,6-Tris-(5'-carboxypentylamino)-1,3,5-triazin und so viel Triäthanolamin enthält, bis der pH-Wert von 8,5 erreicht wird.

Tabelle 7

| Konzentration | 2,5% Additiv in der Testflüssigkeit | | | | | |
|---|---|---|---|---|---|---|
| Additiv-Nr. | 11 | 13 | 16 | 17 | 18 | 19 |
| Späne-Filtrierpapier-Verfahren (Korrosionsgrad) | 0 | 0 | 0 | 0 | 0 | 0 |

**Patentansprüche**

1. Verwendung von Verbindungen der Formel I

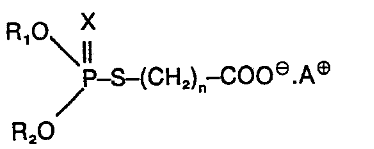

(I),

worin $R_1$ und $R_2$ unabhängig voneinander $C_1$–$C_6$ Alkyl, gegebenenfalls $C_1$–$C_4$ Alkyl-substituiertes Phenyl oder $C_7$–$C_8$ Aralkyl, oder $R_1$ und $R_2$ zusammen eine Gruppe der Formel II

$$-(R_3)C(R_4)-[(R_5)C(R_6)]_m-(R_7)C(R_8)- \quad (II)$$

bedeutet, worin m 0 oder 1 ist, und $R_3$, $R_4$, $R_5$, $R_6$, $R_7$ und $R_8$ unabhängig voneinander Wasserstoff oder Methyl sind, und ferner n 1 oder 2 ist, und X Sauerstoff oder Schwefel bedeutet, und A Li, K, Na, $NH_4$ oder eine Gruppe der Formel III

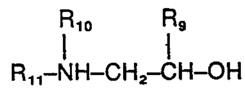

(III)

ist, worin $R_9$ Wasserstoff oder Methyl ist, und $R_{10}$ und $R_{11}$ unabhängig voneinander Wasserstoff, $C_1$–$C_3$ Alkyl oder eine Gruppe $-CH_2-CH(R_9)-OH$ bedeutet, worin $R_9$ die oben angegebene Bedeutung hat, als Zusätze zu wassermischbaren Hydraulikflüssigkeiten.

2. Verwendung gemäss Anspruch 1 von Verbindungen der Formel I, worin $R_1$ und $R_2$ unabhängig voneinander $C_1$–$C_5$ Alkyl sind, X Sauerstoff oder Schwefel bedeutet und n 1 oder 2 ist und A K, Na, $NH_4$ oder eine Gruppe der Formel III bedeutet, worin $R_9$, $R_{10}$ und $R_{11}$ die in Anspruch 1 angegebene Bedeutung haben.

3. Verwendung gemäss Anspruch 1 von Verbindungen der Formel I, worin X Schwefel bedeutet.

4. Verwendung gemäss Anspruch 1 von Verbindungen der Formel I, worin A eine Gruppe der Formel III ist, worin $R_9$ Wasserstoff ist und $R_{10}$ Wasserstoff oder eine Gruppe $-CH_2-CH(R_9)-OH$ ist und $R_{11}$ eine Gruppe $-CH_2-CH(R_9)-OH$ bedeutet.

5. Verwendung gemäss Anspruch von Verbindungen der Formel I, worin A Na, K, $NH_4$ oder eine Gruppe der Formel III bedeutet.

6. Verwendung des Triäthanolaminsalzes der 0,0-Diisobutyl-thiophosphoryl-mercaptoessigsäure, des Na-Salzes der 0,0-Diisobutyl-thiophosphorylmercaptoessigsäure, des Triäthanolamin-, des Na- oder K-Salzes der 0,0-Diisobutyl-thiophosphoryl-3-mercaptopropionsäure gemäss Anspruch 1 als Zusätze zu wassermischbaren Hydraulikflüssigkeiten.

7. Verwendung des N-Isopropyl-äthanolamin-, des Li- oder Na-Salzes der 0,0-Diisopropyl-thiophosphoryl-3-mercaptopropionsäure gemäss Anspruch 1 als Zusätze zu wassermischbaren Hydraulikflüssigkeiten.

8. Wassermischbare Hydraulikflüssigkeiten, enthaltend eine Verbindung der Formel I gemäss Anspruch 1.

9. Wassermischbare Hydraulikflüssigkeiten gemäss Anspruch 10, dadurch gekennzeichnet, dass es sich um Wasser oder um Gemische von Wasser und Glykolen handelt.

10. Verbindungen der Formel I, worin $R_1$ und $R_2$ unabhängig voneinander für n = 1 oder 2 gegebenenfalls $C_1$–$C_4$ Alkyl-substituiertes Phenyl oder $C_7$–$C_8$ Aralkyl oder $R_1$ und $R_2$ zusammen eine Gruppe der Formel II

$$-(R_3)C(R_4)-[(R_5)C(R_6)]_m-(R_7)C(R_8)- \quad (II)$$

bedeutet, worin m 0 oder 1 ist, und $R_3$, $R_4$, $R_5$, $R_6$, $R_7$ und $R_8$ unabhängig voneinander Wasserstoff oder Methyl sind, und $R_1$ und $R_2$ ferner unabhängig voneinander für $n = 1$: $C_4$–$C_6$ Alkyl sind, und $R_1$ und $R_2$, falls A $NH_4$ oder eine Gruppe der Formel III

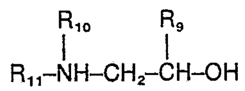 (III)

ist, worin $R_9$ Wasserstoff oder Methyl ist, und $R_{10}$ und $R_{11}$ unabhängig voneinander Wasserstoff, $C_1$–$C_3$ Alkyl oder eine Gruppe $-CH_2-CH(R_9)-OH$ bedeutet, worin $R_9$ die oben angegebene Bedeutung hat, auch $C_1$–$C_3$ Alkyl sind, und $R_1$ und $R_2$ für $n = 2$ $C_1$–$C_5$ Alkyl steht, und ferner X Sauerstoff oder Schwefel bedeutet, und A Li, K, Na, $NH_4$ oder eine Gruppe der Formel III ist, worin $R_9$, $R_{10}$ und $R_{11}$ die oben angegebene Bedeutung haben.

11. Verbindungen gemäss Anspruch 10 der Formel I, worin X Schwefel bedeutet.

12. Verbindungen gemäss Anspruch 10 der Formel I, worin die Substituenten $R_1$, $R_2$, X, n und A die im Anspruch 4 angegebene Bedeutung haben.

13. Herstellung der Verbindungen der Formel I gemäss Anspruch 10, dadurch gekennzeichnet, dass Säuren der Formel IV

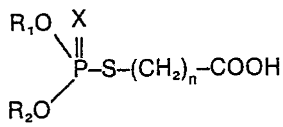 (IV),

worin $R_1$, $R_2$, X und n die im Anspruch 10 angegebene Bedeutung haben, mit einem basischen Li-, K- oder Na-Salz, mit $NH_3$ oder einer Verbindung der Formel V

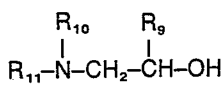 (V),

worin $R_9$, $R_{10}$ und $R_{11}$ die im Anspruch 10 angegebene Bedeutung haben, versalzt werden.

## Claims

1. Use of a compound of the formula I

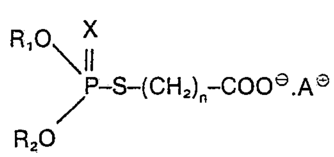 (I),

wherein $R_1$ and $R_2$ independently of each other are $C_1$–$C_6$ alkyl, phenyl or phenyl substituted by $C_1$–$C_4$ alkyl, or are $C_7$–$C_8$ aralkyl, or $R_1$ and $R_2$ together are a group of the formula II

$$-(R_3)C(R_4)-[(R_5)C(R_6)]_m-(R_7)C(R_8)- \quad (II)$$

wherein m is 0 or 1 and $R_3$, $R_4$, $R_5$, $R_6$, $R_7$ and $R_8$ independently of one another are hydrogen or methyl; n is 1 or 2; X is oxygen or sulfur; A is Li, K, Na, $NH_4$ or a group of the formula III

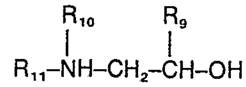 (III)

wherein $R_9$ is hydrogen or methyl and $R_{10}$ and $R_{11}$ independently of each other are hydrogen, $C_1$–$C_3$ alkyl or a $-CH_2-CH(R_9)-OH$ group, wherein $R_9$ is as defined above, as additive in a water-miscible hydraulic fluid.

2. Use according to claim 1 of a compound of formula I, wherein $R_1$ and $R_2$ independently of each other are $C_1$–$C_5$ alkyl, X is oxygen or sulfur, n is 1 or 2, and A is K, Na, $NH_4$ or a group of the formula III, wherein $R_9$, $R_{10}$ and $R_{11}$ are as defined in claim 1.

3. Use according to claim 1 of a compound of the formula I, wherein X is sulfur.

4. Use according to claim 1 of a compound of formula I, in which A is a group of the formula III, wherein $R_9$ is hydrogen, $R_{10}$ is hydrogen or a $-CH_2-CH(R_9)-OH$ group, and $R_{11}$ is a $-CH_2-CH(R_9)-OH$ group.

5. Use according to claim 1 of a compound of the formula I, wherein A is sodium, potassium, $NH_4$ or a group of the formula III.

6. Use of the triethanolamine salt of 0,0-diisobutylthiophosphorylmercaptoacetic acid, the sodium salt of 0,0-diisobutylthiophosphorylmercaptoacetic acid, or the triethanolamine salt, sodium salt or potassium salt of 0,0-diisobutylthiophosphoryl-3-mercaptopropionic acid according to claim 1 as additive in a water-miscible hydraulic fluid.

7. Use of the N-isopropylethanolamine salt, the lithium salt of the sodium salt of 0,0-diisopropylthiophosphoryl-3-mercaptopropionic acid according to claim 1 as additive in a water-miscible hydraulic fluid.

8. A water-miscible hydraulic fluid containing a compound of formula I according to claim 1.

9. A water-miscible hydraulic fluid according to claim 10, which is water or a mixture of water and glycols.

10. A compound of the formula I, wherein $R_1$ and $R_2$ independently of each other, where n is 1 or 2, are phenyl or phenyl substituted by $C_1$–$C_4$ alkyl or are $C_7$–$C_8$ aralkyl, or $R_1$ and $R_2$ together are a group of the formula II

$$-(R_3)C(C_4)-[(R_5)C(R_6)]_m-(R_7)C(R_8) \quad (II)$$

wherein m is 0 or 1 and $R_3$, $R_4$, $R_5$, $R_6$, $R_7$ and $R_8$ independently of one another are hydrogen or methyl; and $R_1$ and $R_2$, independently of each other, where n is 1, are also $C_4$–$C_6$ alkyl, and, if A is $NH_4$ or a group of the formula III

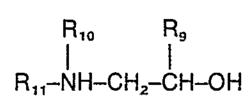 (III)

wherein $R_9$ is hydrogen or methyl and each of $R_{10}$ and $R_{11}$ independently of the other is hydrogen, $C_1$–$C_3$ alkyl or a $-CH_2-CH(R_9)-OH$ group, wherein $R_9$ is as defined above, are also $C_1$–$C_3$ alkyl, and, where n is 2, $R_1$ and $R_2$ are $C_1$–$C_6$ alkyl, and X is

also oxygen or sulfur, and A is Li, K, Na, $NH_4$ or a group of the formula III, wherein $R_9$, $R_{10}$ and $R_{11}$ are as defined above.

11. A compound according to claim 10 of the formula I, wherein X is sulfur.

12. A compound according to claim 10 of the formula I, wherein $R_1$, $R_2$, X, n and A are as defined in claim 4.

13. A process for the preparation of a compound of the formula I according to claim 10, which process comprises reacting an acid of the formula IV

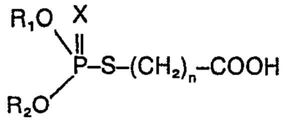 (IV),

wherein $R_1$, $R_2$, X and n are as defined in claim 10, with a basic lithium, potassium or sodium salt, or with $NH_3$ or a compound of the formula V

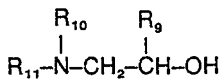 (V),

wherein $R_9$, $R_{10}$ and $R_{11}$ are as defined in claim 10.

**Revendications**

1. Application de composés répondant à la formule I:

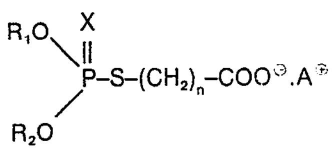 (I),

dans laquelle:

$R_1$ et $R_2$ représentent chacun, indépendamment l'un de l'autre, un alkyle en $C_1$–$C_6$, un phényle éventuellement porteur d'un alkyle en $C_1$–$C_4$, ou un aralkyle en $C_7$ ou $C_8$, ou encore $R_1$ et $R_2$ forment ensemble un radical répondant à la formule II:

$$-(R_3)C(R_4)-[(R_5)C(R_6)]_m-(R_7)C(R_8)- \quad (II)$$

dans laquelle m est égal à 0 ou à 1 et $R_3$, $R_4$, $R_5$, $R_6$, $R_7$ et $R_8$ représentent chacun, indépendamment les uns des autres, l'hydrogène ou un méthyle,

n est égal à 1 ou à 2,

X représente l'oxygène ou le soufre et

A représente Li, K, Na, $NH_4$ ou un radical répondant à la formule III;

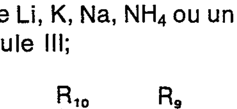 (III)

dans laquelle $R_9$ représente l'hydrogène ou un méthyle tandis que $R_{10}$ et $R_{11}$ représentent chacun, indépendamment l'un de l'autre, l'hydrogène, un alkyle en $C_1$–$C_3$ ou un radical $-CH_2-CH(R_9)-OH$ où $R_9$ a la signification indiquée ci-dessus, comme additifs pour des liquides hydrauliques miscibles à l'eau.

2. Application selon la revendication 1 de composés de formule I dans lesquels $R_1$ et $R_2$ représentent chacun, indépendamment l'un de l'autre, un alkyle en $C_1$–$C_5$, X représente l'oxygène ou le soufre, n est égal à 1 ou à 2 et A représente K, Na, $NH_4$ ou un radical de formule III dans lequel $R_9$, $R_{10}$ et $R_{11}$ ont les significations données à la revendication 1.

3. Application selon la revendication 1 de composés de formule I dans lesquels X représente le soufre.

4. Application selon la revendication 1 de composés de formule I dans lesquels A représente le radical de formule III dans lequel $R_9$ représente l'hydrogène, $R_{10}$ l'hydrogène ou un radical $-CH_2-CH(R_9)-OH$ et $R_{11}$ un radical $-CH_2-CH(R_9)-OH$.

5. Application selon la revendication 1 de composés de formule I dans lesquels A représente Na, K, $NH_4$ ou un radical de formule III.

6. Application du sel de triéthanolamine de l'acide 0,0-diisobutyl-thiophosphorylthio-acétique, du sel sodique de l'acide 0,0-diisobutyl-thiophosphorylthio-acétique, du sel de triéthanolamine, de sodium ou de potassium de l'acide (0,0-diisobutyl-thiophosphorylthio)-3 propionique selon la revendication 1 comme additifs pour des liquides hydrauliques miscibles à l'eau.

7. Application du sel de N-ispropyl-éthanolamine, du sel de lithium ou du sel de sodium de l'acide (0,0-diisopropyl-thiophosphorylthio)-3 propionique selon la revendication 1 comme additif pour des liquides hydrauliques miscibles à l'eau.

8. Liquides hydrauliques miscibles à l'eau qui contiennent un composé de formule I selon la revendication 1.

9. Liquides hydrauliques miscibles à l'eau selon la revendication 8 caractérisés en ce qu'ils sont formés d'eau ou de mélanges d'eau et de glycols.

10. Composés de formule I dans lesquels $R_1$ et $R_2$ représentent chacun, indépendamment l'un de l'autre, pour n = 1 ou 2, un phényle éventuellement porteur d'un alkyle en $C_1$–$C_4$ ou un aralkyle en $C_7$ ou $C_8$, ou $R_1$ et $R_2$ forment ensemble un radical répondant à la formule II:

$$-(R_3)C(R_4)-[(R_5)C(R_6)]_m-(R_7)C(R_8)- \quad (II)$$

dans laquelle m est égal à 0 ou à 1 et $R_3$, $R_4$, $R_5$, $R_6$, $R_7$ et $R_8$ représentent chacun, indépendamment les uns des autres, l'hydrogène ou un méthyle, ou $R_1$ et $R_2$ représentent chacun, indépendamment l'un de l'autre, pour n = 1, un alkyle en $C_4$–$C_6$, ou $R_1$ et $R_2$, dans le cas où A représente $NH_4$ ou un radical répondant à la formule III:

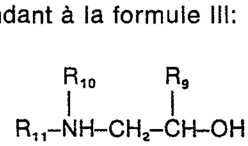 (III)

dans laquelle $R_9$ représente l'hydrogène ou un méthyle tandis que $R_{10}$ et $R_{11}$ représentent chacun, indépendamment l'un de l'autre, l'hydrogène, un

alkyle en $C_1$–$C_3$ ou un radical $-CH_2-CH(R_9)-OH$ (dans lequel $R_9$ a la signification indiquée ci-dessus), représentent aussi chacun un alkyle en $C_1$–$C_3$, ou $R_1$ et $R_2$, pour $n = 2$, représentent chacun un alkyle en $C_1$–$C_6$, X représente l'oxygène ou le soufre et A représente Li, K, Na, $NH_4$ ou un radical de formule III dans lequel $R_9$, $R_{10}$ et $R_{11}$ ont les significations indiquées ci-dessus.

11. Composés de formule I selon la revendication 10 dans lesquels X représente le soufre.

12. Composés de formule I selon la revendication 10 dans lesquels $R_1$, $R_2$, X, n et A ont les significations données à la revendication 4.

13. Préparation de composés de formule I selon la revendication 10, procédé caractérisé en ce qu'on salifie des acides répondant à la formule IV:

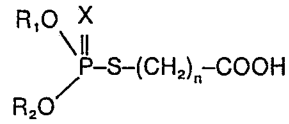

(IV),

dans laquelle $R_1$, $R_2$, X et n ont les significations données à la revendication 10, avec un sel basique de lithium, de potassium ou de sodium, avec $NH_3$ ou avec un composé répondant à la formule V:

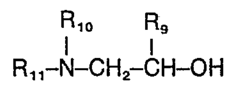

(V),

dans laquelle $R_9$, $R_{10}$ et $R_{11}$ ont les significations données à la revendication 10.